# EUROPEAN PATENT APPLICATION

(11) **EP 3 176 091 A2**
(43) Date of publication of application: **07.06.2017**
(21) Application number: 16198207.9
(22) Date of filing: 10.11.2016
(51) Int. Cl.: B64D 25/20, B63B 45/00, B63C 9/00

(54) **SYSTEM, METHOD, AND APPARATUS FOR DYE IN SEARCH, RESCUE, AND RECOVERY**

(30) Priority: 12.11.2015 US 201514939485
(71) Applicant: Goodrich Corporation, Charlotte, NC 28217-4578 (US)
(72) Inventor: VAN HASSEL, Bart A., Weatogue, CT 06089 (US)
(74) Representative: Iceton, Greg James

(57) **Abstract**

Systems, methods, and apparatus for the use of an emergency dye for search, rescue, and recovery is disclosed. In various embodiments, an emergency dye may comprise a high-visibility dye configured to reflect light in a visible light spectrum. The emergency dye may be configured to be disposed of on an aircraft. The emergency dye may be configured to be disposed of within an emergency dye package (205). The emergency dye may also be configured to be disposed of within an aircraft's hydraulic system. The emergency dye may be configured to be released from the aircraft, based on monitoring an aircraft's avionics system for an imminent crash alert.

## Description

### FIELD

The present disclosure generally relates to search, rescue, and recovery, and more specifically, to a dye and dye systems for search, rescue, and recovery.

### BACKGROUND

The location of an aircraft during a flight is not always known. Thus, if an aircraft does not return from a mission, it may be difficult to locate the aircraft. Signal flares and/or smoke signals may be used to provide a visual emergency signal; however, both are only valuable for a limited time before disappearing. Underwater locator beacons may be used to emit frequencies underwater, however, it takes time to deploy autonomous underwater vehicles for detection, and those vehicles have to resurface every 24 hours in order to download data and recharge batteries. Current technology developments focus on equipment that would enable knowledge about the aircraft location at all times, such as through the use of a global positioning system (GPS). However, a limitation also arises in these prior technologies when the aircraft is in a location that is unresponsive to GPS, or if such systems are disabled or malfunctioning.

### SUMMARY

In various embodiments, an emergency dye package may comprise a high-visibility dye and a release mechanism. The emergency dye package may be disposed of within an aircraft. The high-visibility dye may be disposed within the emergency dye package, and be configured to reflect light in a visible light spectrum. The release mechanism may be configured to release the high-visibility dye.

In various embodiments, a method for deploying an emergency dye may comprise monitoring an avionics system for an imminent crash alert and commanding a deployment command to an emergency dye package to deploy a high-visibility dye. The step of monitoring the avionics system may be performed by a processor. The step of commanding the deployment command may be performed by a processor. The emergency dye package may comprise a high-visibility dye. The high-visibility dye may be configured to reflect light in a visible light spectrum.

In various embodiments, a hydraulic system of an aircraft may comprise a hydraulic fluid and a high-visibility dye. The high-visibility dye may be mixed with the hydraulic fluid. The hydraulic fluid may be disposed of within the hydraulic system. The high-visibility dye may be configured to reflect light in a visible light spectrum.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a top-down view of an aircraft, in accordance with various embodiments;
FIG. 2A illustrates a perspective view of an emergency dye package, in accordance with various embodiments;
FIG. 2B illustrates a perspective cross-sectional view of an emergency dye package, in accordance with various embodiments;
FIG. 3 illustrates an emergency dye released in water, in accordance with various embodiments;
FIG. 4 illustrates a perspective cross-sectional view of an emergency dye package, further comprising a second high-visibility dye, in accordance with various embodiments;
FIG. 5 illustrates a perspective cross-sectional view of an emergency dye package, further comprising a non-polar solvent, in accordance with various embodiments;
FIG. 6 is a block diagram illustrating the use of an emergency dye in an aircraft hydraulic system, in accordance with various embodiments; and
FIG. 7 is a block diagram illustrating deployment of an emergency dye based on an imminent crash alert, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

In various embodiments, a system, method, and apparatus for high-visibility dye used in search, rescue, and recovery is disclosed. The location of an aircraft may be of great interest when an emergency has occurred. In this regard, and in various embodiments, an aircraft may be equipped with a dye that may be released in response to an emergency. Certain types of dyes may absorb more light of certain wavelengths than other types of dye. The term "visible wavelength" of the dye may therefore refer to a reflectance signature of a dye that is unique and easy to detect. The wavelength of the dye may be tailored to a visible light spectrum that is detectable by satellite systems and/or by a hyperspectral sensor.

After the dye is released, a scan of the area by a satellite system or other visual reconnaissance may provide the location of the aircraft. A high-visibility dye may be used to provide the location of the aircraft. A high-visibility dye is a dye that is tailored to absorb more light at a wavelength that is highly susceptible to detection by a satellite system or other visual reconnaissance. In this regard, a high-visibility dye may therefore be easily detectable. High-visibility dye for use in search, rescue, and recovery may be packaged in an emergency dye package, an aircraft hydraulic system, and/or any other suitable system, method, or apparatus.

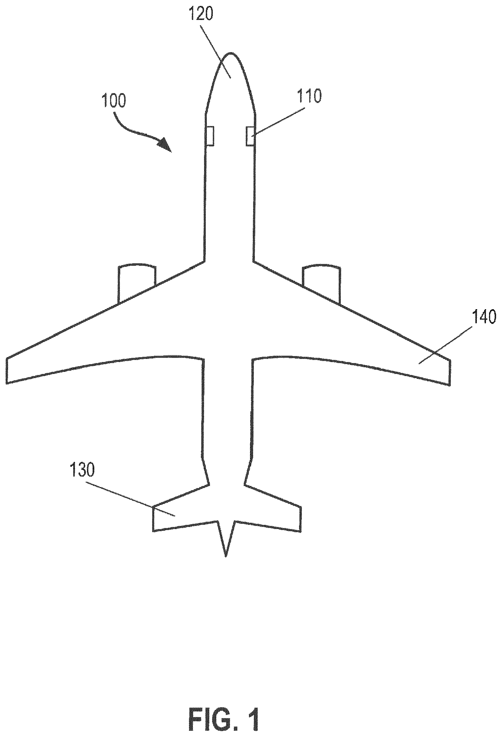

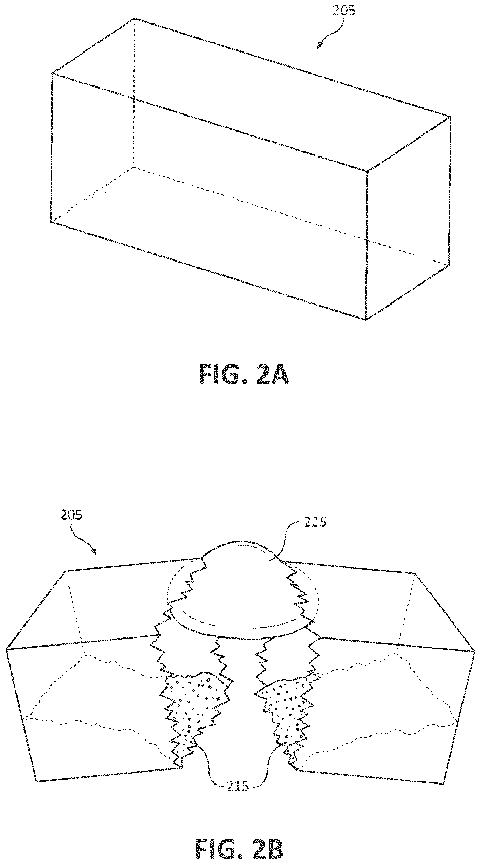

In various embodiments, and with reference to FIGs. 1 and 2A, an emergency dye package 205 is provided. Emergency dye package 205 may be configured to be disposed in an aircraft 100. In this regard, emergency dye package 205 may be disposed of in any suitable location allowing emergency dye package 205 to be released from the aircraft 100 in response to an imminent crash alert, in response to the aircraft crashing, and/or through any other suitable indication of an emergency landing. Emergency dye package 205 may be configured to be disposed within at least one door 110 of the aircraft, within the nose 120 of the aircraft, within the tail 130 of the aircraft, or within at least one wing 140 of the aircraft. In various embodiments, more than one emergency dye package 205 may be disposed of throughout the aircraft. For example, one emergency dye package 205 may be disposed in the tail 130 and one emergency dye package 205 may also be disposed in the nose 120. As a further example, multiple emergency dye packages 205 may be disposed in the same area, such as disposing three emergency dye packages 205 in a door 110. In this regard, the number of emergency dye packages 205 may be scaled as is necessary.

In various embodiments, and with reference to FIGs. 2A and 2B, emergency dye package 205 may be configured to provide structural support for a high-visibility dye 215. Emergency dye package 205 may be configured to release high-visibility dye 215. Emergency dye package 205 may comprise high-visibility dye 215 and a release mechanism 225. Emergency dye package may also comprise a second high-visibility dye, and/or a non-polar solvent.

In various embodiments, emergency dye package 205 may be any size and shape suitable for storing a high-visibility dye 215. In this regard, emergency dye package 205 may be in the shape of a rectangular cuboid. Emergency dye package 205 may also be cylindrically shaped, cube-shaped, and/or any other suitable shape. Emergency dye package 205 may be made of any suitable material. For example, emergency dye package 205 may be made from a durable fabric. Emergency dye package 205 may also be made from a metal, alloy, plastic, rubber, wood, composite, polymer, and/or any other suitable material. In various embodiments, emergency dye package 205 may be made of a material that dissolves in water, such as, for example, a water soluble paper. Emergency dye package 205 may also be made of a biodegradable material, such as, for example, a biodegradable plastic or paper. Emergency dye package 205 may also comprise any suitable coating and/or finish. Emergency dye package 205 may be a one-piece device made using any suitable process, or may also be an assembly of parts.

In various embodiments, and with further reference to FIG. 2B, a high-visibility dye 215 may be configured to reflect light in a visible light spectrum that is highly susceptible to detection by a satellite system or other visual reconnaissance, when compared to a regular dye. In this regard, high-visibility dye 215 may reflect light in a visible light spectrum that does not overlap with the optical signatures of natural phenomena or man-made structures. High-visibility dye 215 may be disposed within emergency dye package 205. High-visibility dye 215 may be located next to a release mechanism 225. For example, high-visibility dye 215 may be disposed in such close proximity to the release mechanism 225 that the release mechanism 225 may release high-visibility dye 215 upon the occurrence of an imminent crash alert.

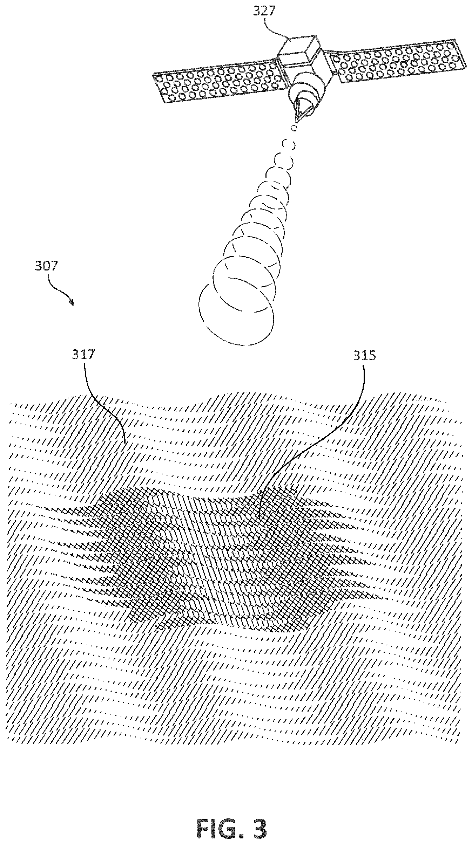

In various embodiments, and with reference to FIG. 3, high-visibility dye 315 may be any type of dye suitable to reflect light in the visible light spectrum. High-visibility dye 315 may reflect light from any source of light, such as from passive and active illumination. High-visibility dye 315 may reflect light from a passive illumination source, such as solar irradiance. High-visibility dye 315 may also reflect light from an active illumination source. For example, an active illumination source may comprise an aerial reconnaissance system, or any other suitable system or device, designed to actively illuminate an area of released high-visibility dye 315 at a wavelength at which high-visibility dye 315 absorbs light.

High-visibility dye 315 may be any type of dye that is detectable by an earth observation station 327. For example, high-visibility dye 315 may be any type of dye that is detectable by the optical systems of an orbital satellite 327, such as a Landsat satellite. In this regard, high-visibility dye 315 may be detectable through the use of more than one satellite 327, in order to more accurately detect high-visibility dye. For example, the Hyperion Earth Observing-1 (EO-1) satellite follows Landsat 7 in its orbit by exactly one minute. In this way, Hyperion EO-1 provides improved Earth surface characterization through complimentary redundancy.

High-visibility dye 315 may also be any type of dye that is detectable by hyperspectral imaging technology. Spaceborne hyperspectral imagers enable a high area coverage rate, which may be beneficial to shorten the time of detecting released high-visibility dye 315 in a larger area. High-visibility dye 315 may therefore be tailored to certain spectral bands of the hyperspectral imager, to enable detection by hyperspectral imaging technology. In this regard, high-visibility dye 315 may comprise any type of dye suitable to be detected by hyperspectral imaging technology.

High-visibility dye 315 may be a type of dye similar to dyes used in dye penetrant tests for aircraft parts and/or in weld checks. In various embodiments, high-visibility dye 315 may be a commercially available dye. High-visibility dye 315 may comprise a xanthene dye with subcategories of fluorenes and/or fluorones. For example, high-visibility dye 315 may comprise rhodamine WT (C₂₉H₂₉N₂O₅ClNa₂; Chemical Abstracts Service Registry Number 37299-86-8), a synthetic dye having a red to pink color. High-visibility dye 315 may also comprise fluorescein (C₂₀H₁₂O₅; Chemical Abstracts Service Registry Number 2321-07-5), a dye having a yellow to green color. High-visibility dye 315 may also comprise any other suitable type of commercially available dye.

In various embodiments, high-visibility dye 315 may also be any amount of dye suitable to be visually detected in water 317. When high-visibility dye 315 is released into water 317, it may begin to disperse on the surface of the water 317. This may have the effect of enlarging the detection area, but it may also make high-visibility dye 315 more difficult to detect due to its lower concentration. Dispersal of high-visibility dye 315 may also happen more quickly during bad weather conditions. In this regard, the amount of high-visibility 315 may be any amount suitable to withstand this dispersal effect, and/or to prolong the amount of time that high-visibility dye 350 is detectable.

High-visibility dye 315 may be any color. High-visibility dye 315 may be any color that is suitable to be viewed against a body of water 317, such as, for example, when high-visibility dye 315 is dispersed in water 317. In this regard, high-visibility dye 315 may be a dye that is detectable in a part of the visual spectrum not common to materials generally found in water 317. For example, high-visibility dye 315 may be yellow, red, orange, and/or any other suitable color.

High-visibility dye 315 may also be fluorescent. In various embodiments where high-visibility dye 315 is fluorescent, high-visibility dye 315 may also be detectable by naval surface vehicles, and/or any other suitable instrument. In this regard, a fluorescent high-visibility dye 315 may enable a naval surface vehicle and/or any other suitable instrument to detect high-visibility dye 315 during the night, when visual observation of high-visibility dye 315 may no longer be feasible. For example, and in various embodiments, a naval surface vehicle and/or any other suitable instrument could provide active illumination to the area where high-visibility dye 315 is dispersed, to detect the location of high-visibility dye 315. In various embodiments, a naval surface vehicle and/or any other suitable instrument may also sample the water of the area where high-visibility dye 315 is dispersed, passing water samples continuously through a spectrometer in order to detect high-visibility dye 315.

In various embodiments, and with reference again to FIG. 2B, high-visibility dye 215 may be in any form suitable to reflect light in the visible light spectrum. In this regard, high-visibility dye 215 may be a powder, a liquid, encapsulated within polymer microbeads and/or microspheres, a pressed dye pellet, a slurry, an emulsion of dye and hydrophobic liquid, such as oil, and/or any other suitable form. In various embodiments where the high-visibility dye 215 is in a liquid form, it may also be desirable for the liquid to have a high viscosity. High-visibility dye 215 may also be biodegradable. High-visibility dye 215 may also be configured to float on water. In this regard, high-visibility dye may have hydrophobic properties. For example, a surfactant may be used to create high-visibility dye 215 having hydrophobic properties. High-visibility dye 215 may also be adhered to a hydrophobic polymer or plastic, and/or any other suitable additive having hydrophobic properties.

In various embodiments, and with further reference to FIGs. 2A and 2B, a release mechanism 225 may be configured to release high-visibility dye 215. Release mechanism 225 may also be configured to release a second high-visibility dye, a non-polar solvent, and/or hydraulic fluid mixed with a high-visibility dye 215. Release mechanism 225 may be located in any location suitable to release high-visibility dye 215. In this regard, release mechanism 225 may be in operable communication with emergency dye package 205. Release mechanism 225 may also be at least partially disposed within the emergency dye package 205. Release mechanism 225 may also be located in an aircraft's hydraulic system, in a location suitable to release hydraulic fluid mixed with a high-visibility dye.

Release mechanism 225 may release high-visibility dye 215 using any suitable means. In this regard, release mechanism 225 may release high-visibility dye 215 using electrical, mechanical, chemical, and/or any other means. For example, release mechanism 225 may comprise an electric motor, an actuator, a compression spring, a chemical inflation airbag, a CO₂ cartridge, and/or any other mechanism suitable to deploy high-visibility dye 215. Release mechanism 225 may release high-visibility dye 215 at any suitable time. For example, release mechanism 225 may release high-visibility dye 215 automatically, by an operator's command, in response to an imminent crash alert, in response to the aircraft crashing, in response to the emergency dye package contacting water, and/or through any other suitable indication of an emergency landing.

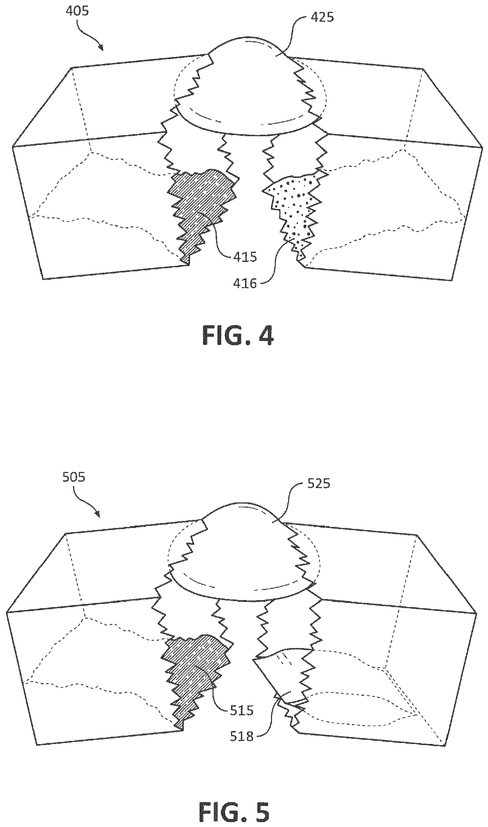

In various embodiments and with reference to FIG. 4, a second high-visibility dye 416 may also be configured to reflect light in a distinct visible light spectrum from that of the high-visibility dye 415. Second high-visibility dye 416 may be configured to decrease the possibility of false positives when an earth observation station is attempting to detect the deployed dye. In this regard, having at least two high-visibility dyes, each having properties of a distinct visible light spectrum, may make it easier for an earth observation station 327, and/or any other remote observation station, to correctly detect the dye in a search, rescue, and recovery situation. Similarly, second high-visibility dye 416 may also be used to increase the possibility of detection by an earth observation station, in the event of a search, rescue, and recovery situation.

Second high-visibility dye 416 may be disposed within emergency dye package 405, in a location similar to that of high-visibility dye 415. Second high-visibility dye 416 may also comprise all of the same suitable characteristics and attributes as identified throughout this disclosure for high-visibility dye 415. In this regard, second high-visibility dye 416 may be any type of dye, any amount of dye, and may be in any form suitable to reflect light in a visible light spectrum. For all purposes, second high-visibility dye 416 may have the similar properties and characteristics as high-visibility dye 415, though second high-visibility dye 416 reflects light at a different visible light spectrum from that of high-visibility dye 415.

In various embodiments and with reference to FIG. 5, a non-polar solvent 518 may be configured to mix with high-visibility dye 515 and/or second high-visibility dye upon deployment of the emergency dye package 505. In this regard, non-polar solvent 518 is configured to mix with high-visibility dye 515, and/or second high-visibility dye, such that the resulting mixture will float on water, not dissolve in water, and/or will be more coherent over longer periods of time when subjected to water. Non-polar solvent 518 may be disposed within emergency dye package 505. Non-polar solvent 505 may also be disposed within any distance suitable for mixing with high-visibility dye 515 and/or second high-visibility dye upon deployment of the emergency dye package 505.

In various embodiments, non-polar solvent 518 may be in any amount suitable to make high-visibility dye 515 float on water, not dissolve in water, and/or be more coherent over longer periods of time when subjected to water. For example, non-polar solvent 518 may be in an equal amount to the amount of high-visibility dye 515 located in emergency dye package 505. In further embodiments, non-polar solvent 518 may also be in a greater amount to the amount of high-visibility dye 515. Non-polar solvent 518 may be any suitable type of non-polar solvent. For example, non-polar solvent 518 may be an oil or a similar suitable type of solvent.

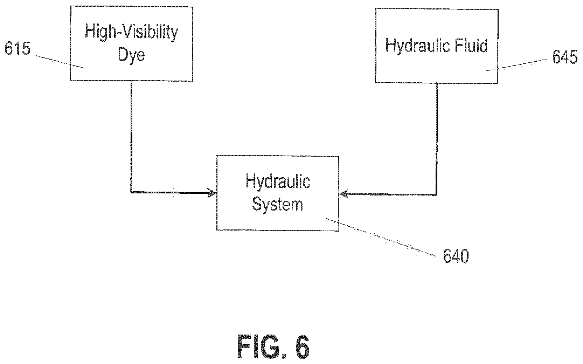

In various embodiments and with reference to FIG. 6, high-visibility dye 615 may be configured for use in a hydraulic system 640 of an aircraft. Hydraulic system 640 may be any suitable system on an aircraft having hydraulic fluid 645 and used to provide a means for the operation of aircraft components. In this regard, hydraulic system 640 may be any suitable system used to operate and/or control landing gear(s), flaps, flight control surfaces, and/or brakes.

In various embodiments, high-visibility dye 615 may be configured for use in an aircraft hydraulic system 640 by mixing high-visibility dye 615 with hydraulic fluid 645. In this regard, the resulting mixture of high-visibility dye 615 and hydraulic fluid 645 can be added to the hydraulic system 640. High-visibility dye 615 may also be mixed directly into hydraulic fluid 645 already located within the hydraulic system 640. The amount of high-visibility dye 615 mixed with hydraulic fluid 645 can be in any amount that still allows the hydraulic system 640 to function correctly, while also still reflecting light in a visible light spectrum. A second high-visibility dye may also be mixed with hydraulic fluid 645.

In various embodiments, the mixture of high-visibility dye 615 and hydraulic fluid 645 may be configured to deploy from the aircraft. Hydraulic fluid 645 may be deployed from the aircraft using any suitable method. Hydraulic fluid 645 may be configured to deploy from the aircraft in the event of an aircraft crash. In this regard, the hydraulic fluid 645 may leak out of the aircraft due to a rupture of the hydraulic system 640 caused by the force of the impact of the crash. Hydraulic fluid 645 may also leak out of the aircraft due to any other failure caused by the force of the impact of a crash.

In various embodiments, hydraulic fluid 645 may also be configured to be deployed by a release mechanism. In this regard, a release mechanism may be located in close proximity to the hydraulic system 640, and may be configured to deploy hydraulic fluid 645 in the event of an imminent crash alert received from an avionics system, and/or during any other suitable event. Hydraulic fluid 645 may also be configured to be deployed by an aircraft pilot's command. Similar to dumping fuel, hydraulic fluid 645 may be configured to be leaked from the hydraulic system 640 at the command of a pilot or an electronic aircraft controller. The hydraulic fluid 645 and high-visibility dye 615 mixture may then be detected through any suitable means, including those means discussed herein.

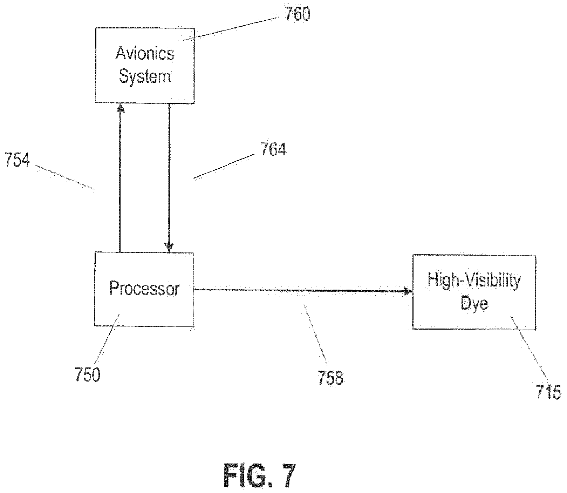

In various embodiments and with reference to FIG. 7, a system and method for deploying high-visibility dye 715 based on the occurrence of an imminent crash alert 765 may comprise a processor 750, an avionics system 760, and high-visibility dye 715. High-visibility dye 715 may be configured to deploy based on the occurrence of an imminent crash alert 764. In this regard, a processor 750 may monitor 754 an avionics system 760 for an imminent crash alert 764. When an imminent crash alert 764 is detected and/or received, the processor 750 may be configured to send a deployment command 758 to high-visibility dye 715, with the high-visibility dye 715 then deploying.

Processor 750 may comprise any type of processor or system suitable to monitor, send, and receive commands from an avionics system. Avionics system 760 may comprise any onboard system configured to monitor and/or control flight components of an aircraft. Avionics system 760 may be an electrical system comprising communications, navigation, flight control, and/or any other suitable components.

An imminent crash alert 764 may be produced responsive to any data indicative of an emergency. In this regard, imminent crash alert 764 may be data indicative of an imminent aircraft crash and/or any other emergency situation. Imminent crash alert 764 may comprise, for example, GPS data indicative that the aircraft is over water, and/or that the aircraft's altitude is changing at an abnormal and/or emergency rate. Imminent crash data 764 may also comprise data from avionics system 760 indicating an imminent crash, and/or any other data indicative of an emergency.

When the processor 750 detects an imminent crash alert 764, processor 750 may be configured to send a deployment command 758 to high-visibility dye 715. Deployment command 758 may be configured to deploy high-visibility dye 715, and/or may be configured to activate a release mechanism. A release mechanism may be configured to be located in any suitable position, such as, for example, in an emergency dye package, in a hydraulic system, and/or in close proximity to high-visibility dye 715. High-visibility dye 715 may then be deployed by any suitable means, including any means and methods set forth in this disclosure.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. An emergency dye package, comprising:
a high-visibility dye disposed within the emergency dye package, wherein the high-visibility dye is configured to have a visible wavelength in a visible light spectrum; and
a release mechanism in operable communication with the emergency dye package and configured to release the high-visibility dye from the emergency dye package.

2. The emergency dye package of claim 1, further comprising an at least one second high-visibility dye located within the emergency dye package, wherein the at least one second high-visibility dye is configured to reflect light at a visible light spectrum distinct from the high-visibility dye, and/or wherein the high-visibility dye is encapsulated into an at least one polymer microbead.

3. The emergency dye package of claim 1, further comprising a non-polar solvent located within the package, wherein the non-polar solvent is configured to mix with the high-visibility dye in response to release, and/or wherein the release mechanism is configured to automatically release the high-visibility due from the emergency dye package.

4. The emergency dye package of claim 1, wherein the release mechanism is configured to release the high-visibility dye in response to the emergency dye package contacting water.

5. A method for deploying an emergency dye, comprising:
determining that a crash is imminent; and
releasing a high-visibility dye in response to determining that a crash is imminent.

6. The method of claim 5, wherein the step of determining that a crash is imminent further comprises:
monitoring, by a processor, an avionics system for an imminent crash alert; and
commanding, by the processor, a deployment command to an emergency dye package, wherein the emergency dye package comprises a high-visibility dye having a visible wavelength in a visible light spectrum, and wherein the high-visibility dye is released in response to the deployment command.

7. The method of claim 6, wherein the imminent crash alert comprises GPS indicative that the aircraft is over water; or
wherein the imminent crash alert comprises data from the avionics system that the aircraft's altitude is changing at an emergency rate; or
wherein the imminent crash alert comprises data from the avionics systems indicative of an imminent crash.

8. The method of claim 6, further comprising, releasing, by the emergency dye package, an at least one second high-visibility dye, wherein the at least one second high-visibility dye is configured to reflect light at a visible light spectrum distinct from the high-visibility dye.

9. The method of claim 5, wherein the high-visibility dye is configured to be detectable by an at least one orbital satellite; and/or wherein the high-visibility dye is configured to be detectable by an at least one hyperspectral imager.

10. A hydraulics system of an aircraft comprising:
a hydraulic fluid located within the hydraulics system of the aircraft; and
a high-visibility dye mixed with the hydraulic fluid, wherein the high-visibility dye has a visible wavelength in a visible light spectrum.

11. The hydraulics system of claim 10, further comprising an at least one second high-visibility dye mixed with the hydraulic fluid, wherein the at least one second high-visibility is configured to reflect light at a visible light spectrum distinct from the high-visibility dye.

12. The hydraulics system of claim 10, wherein the high-visibility dye is a xanthene dye with subcategories of fluorenes and fluorones.

13. The hydraulics system of claim 10, further comprising a release mechanism located within the hydraulics system.

14. The hydraulics system of claim 13, wherein the release mechanism is configured to release the hydraulic fluid in response to an aircraft crash.

15. The hydraulics system of claim 13, wherein the release mechanism is configured to release the hydraulic fluid in response to an imminent crash alert received from an avionics system.
